# EUROPEAN PATENT APPLICATION

(11) **EP 2 666 689 A1**
(43) Date of publication of application: **27.11.2013**
(21) Application number: 11856032.5
(22) Date of filing: 20.10.2011
(51) Int. Cl.: B60W 10/02, B60K 6/48, B60K 6/54, B60L 7/20, B60L 11/14, B60W 10/06, B60W 10/08, B60W 20/00, F02D 29/00, F02D 29/02, F02D 45/00

(54) **REGENERATIVE CONTROL DEVICE, HYBRID AUTOMOBILE, REGENERATIVE CONTROL METHOD, AND PROGRAM**

(30) Priority: 20.01.2011 JP 2011009761
(71) Applicant: Hino Motors Ltd., Tokyo 191-8660 (JP)
(72) Inventor: SUZUKI, Masahiro, Hino-shi Tokyo 191-8660 (JP)
(74) Representative: Skone James, Robert Edmund
(86) International application number: PCT/JP2011/074130
(87) International publication number: WO 2012/098743

(57) **Abstract**

The purpose of the present invention is to optimally assess whether to connect or disconnect the rotating shaft of an engine and the rotating shaft of an electric motor in a regenerating state during deceleration. The purpose is achieved by configuring a hybrid ECU (18) for performing a control procedure so that a calculation formula is stored for varying the cargo load for each of a plurality of patterns in advance and calculating the percentage improvement in fuel consumption from the engine speed and the requested torque when a hybrid automobile (1) has traveled for a predetermined time in a state in which the rotating shaft of the engine (10) and the rotating shaft of the electric motor (13) are connected to each other during deceleration of the automobile; the percentage improvement in fuel consumption is calculated on the basis of the formula as well as the engine speed and the requested torque when the hybrid automobile (1) has traveled for a predetermined time during deceleration; and electric power is regenerated in a state in which the rotating shaft of the engine (10) and the rotating shaft of the electric motor (13) are connected to each other when the percentage improvement in fuel consumption thus calculated satisfies a predetermined condition.

## Description

### {Technical Field}

The present invention relates to a regeneration control device, a hybrid vehicle, a regeneration control method, and a computer program.

### {Background Art}

A hybrid vehicle includes an engine and an electric motor and is capable of running by the engine or the electric motor, or is capable of running by the cooperation between the engine and the electric motor. In that case, during the deceleration of the hybrid vehicle, the electric motor is rotated by the rotational force of the wheel and functions as an electric generator so that the battery of the hybrid vehicle can be charged (it is referred to as regenerative power generation). As described above, when the electric motor performs regenerative power generation, regeneration torque is generated at the electric motor in proportion to the electric power regenerated by the electric motor. The regeneration torque functions as braking force during the deceleration of the hybrid vehicle (for example, see patent literature PTL1). At that time, for an efficient regenerative power generation by the electric motor, the hybrid car is controlled to disconnect the rotating shaft of the engine from the rotating shaft of the electric motor in order to disconnect the engine from the driving system of the hybrid vehicle and eliminate the braking force by the engine braking so that the electric motor can perform regenerative power generation with a maximum regeneration torque (or, namely, a maximum electric power regeneration).

### {Citation List}

### {Patent Literature}

PTL1: JP 2007-223421 A

### {Summary of Invention}

### {Technical Problem}

As described above, the engine autonomously rotates in an idling state when the rotating shaft of the engine is disconnected from the rotating shaft of the electric motor for an efficient regenerative power generation by the electric motor. This causes the engine to consume fuel although the amount is low. On the other hand, at the deceleration, when the rotating shaft of the engine is connected to the rotating shaft of the electric motor, the engine does not have to consume fuel at all because the engine can maintain the rotation without performing fuel injection. However, when the rotating shaft of the engine is connected to the rotating shaft of the electric motor, friction that has a magnitude as much as the friction of the engine is added to the friction of the electric motor works as braking force. This causes the deceleration of the hybrid vehicle to be large. Thus, the vehicle speed of the hybrid vehicle decreases without sufficiently obtaining the regenerated electric power.

As described above, at the deceleration of the hybrid vehicle, both of the fuel consumption of the engine and the electric power to be regenerated by the electric motor are affected by whether the rotating shaft of the engine is disconnected or connected from/to the rotating shaft of the electric motor. In that case, because various factors are complexly intertwined with each other, it is difficult to determine whether to disconnect or connect the rotating shaft of the engine from/to the rotating shaft of the electric motor so that both of the fuel consumption of the engine and the electric power to be regenerated by the electric motor come into preferable states at the deceleration of the hybrid vehicle.

In light of the foregoing, an objective of the present invention is to provide a regeneration control device, a hybrid vehicle, a regeneration control method, and a computer program that can optimally determine in a regeneration state during deceleration whether to disconnect or connect the rotating shaft of the engine from/to the rotating shaft of the electric motor.

### {Solution to Problem}

An aspect of the present invention is directed to a regeneration control device. The regeneration control device of a hybrid vehicle that includes an engine and an electric motor, that is capable of running by the engine or the electric motor or capable of running by a cooperation between the engine and the electric motor, and that is capable of performing regenerative power generation with the electric motor at least during deceleration includes: means for holding a computation formula for calculating a fuel cost improvement effect rate from an engine rotational speed and a request torque at a time when the hybrid vehicle has run, in advance, for a predetermined period of time in each of a plurality of patterns of running with varying an amount of loaded cargo in multiple steps while a rotating shaft of the engine and a rotating shaft of the electric motor have been connected to each other during deceleration of the hybrid vehicle; and control means for calculating the fuel cost improvement effect rate based on the engine rotational speed and the request torque at the time when the hybrid vehicle has run for a predetermined period of time while decelerating, and based on the computation formula and, when the calculated fuel cost improvement effect rate satisfies a predetermined condition, the control means for controlling the hybrid vehicle to perform a regenerative power generation while a rotating shaft of the engine and the rotating shaft of the electric motor are connected to each other.

For example, the computation formula may be a regression expression for an average value of the engine rotational speed, an average value of the request torque, a variance of the engine rotational speed, and a variance of the request torque of the fuel improvement effect rate that has been established based on an average value of the engine rotational speed, an average value of the request torque, a variance of the engine rotational speed, and a variance of the request torque at a time when the hybrid vehicle has run, in advance, for a predetermined period of time in each of a plurality of patterns of running with varying an amount of loaded cargo in multiple steps while the rotating shaft of the engine and the rotating shaft of the electric motor have been connected to each other during deceleration of the hybrid vehicle, and the fuel cost improvement effect rate at that time; and the control means may calculate the average value of the engine rotational speed, the average value of the request torque, the variance of the engine rotational speed, and the variance of the request torque from the engine rotational speed and the request torque at the time when the hybrid vehicle has run for a predetermined period of time while decelerating and substitutes a result from the calculation into the regression expression in order to calculate the fuel cost improvement effect rate.

Also, the means for holding the computation formula may hold a neural network, instead of the computation formula, the neural network being established based on the engine rotational speed and the request torque at a time when the hybrid vehicle has run, in advance, for a predetermined period of time in each of a plurality of patterns of running with varying an amount of loaded cargo in multiple steps while the rotating shaft of the engine and the rotating shaft of the electric motor have been connected to each other during deceleration of the hybrid vehicle, and based on the fuel cost improvement effect rate; and the control means may input, to the neural network, the engine rotational speed and the request torque at the time when the hybrid vehicle has run for a predetermined period of time while decelerating in order to calculate the fuel cost improvement effect rate.

The computation formula may be a membership function that has been established based on the engine rotational speed and the request torque at a time when the hybrid vehicle has run, in advance, for a predetermined period of time in each of a plurality of patterns of running with varying an amount of loaded cargo in multiple steps while the rotating shaft of the engine and the rotating shaft of the electric motor have been connected to each other during deceleration of the hybrid vehicle, and based on the fuel cost improvement effect rate; and the control means may substitute the engine rotational speed and the request torque at the time when the hybrid vehicle has run for a predetermined period of time while decelerating into the membership function in order to calculate the fuel cost improvement effect rate.

Another aspect of the present invention is directed to a hybrid vehicle. The hybrid vehicle includes the regeneration control device according to the aspect of the present invention.

Still another aspect of the present invention is directed to a regeneration control method. The regeneration control method of a hybrid vehicle that includes an engine and an electric motor, that is capable of running by the engine or the electric motor or capable of running by a cooperation between the engine and the electric motor, and that is capable of performing regenerative power generation with the electric motor at least during deceleration includes control step for holding a computation formula that describes a relationship between an engine rotational speed and request torque, and a fuel cost improvement effect rate, the engine rotational speed and the request torque at a time when the hybrid vehicle has run, in advance, for a predetermined period of time in each of a plurality of patterns of running with varying an amount of loaded cargo in multiple steps while a rotating shaft of the engine and a rotating shaft of the electric motor have been connected to each other during deceleration of the hybrid vehicle, the step being for calculating the fuel cost improvement effect rate based on the engine rotational speed and the request torque at the time when the hybrid vehicle has run for a predetermined period of time while decelerating, and based on the computation formula, and the step being for controlling the hybrid vehicle to perform a regenerative power generation while the rotating shaft of the engine and the rotating shaft of the electric motor are connected to each other when the calculated fuel cost improvement effect rate satisfies a predetermined condition.

The other aspect of the present invention is directed to a computer program. The computer program causes an information processing apparatus to implement a function of the regeneration control device according to the aspect of the present invention.

### {Advantageous Effects of Invention}

According to the present invention, whether to disconnect or connect the rotating shaft of the engine from/to the rotating shaft of the electric motor can optimally be determined in a regeneration state during deceleration.

### {Brief Description of Drawings}

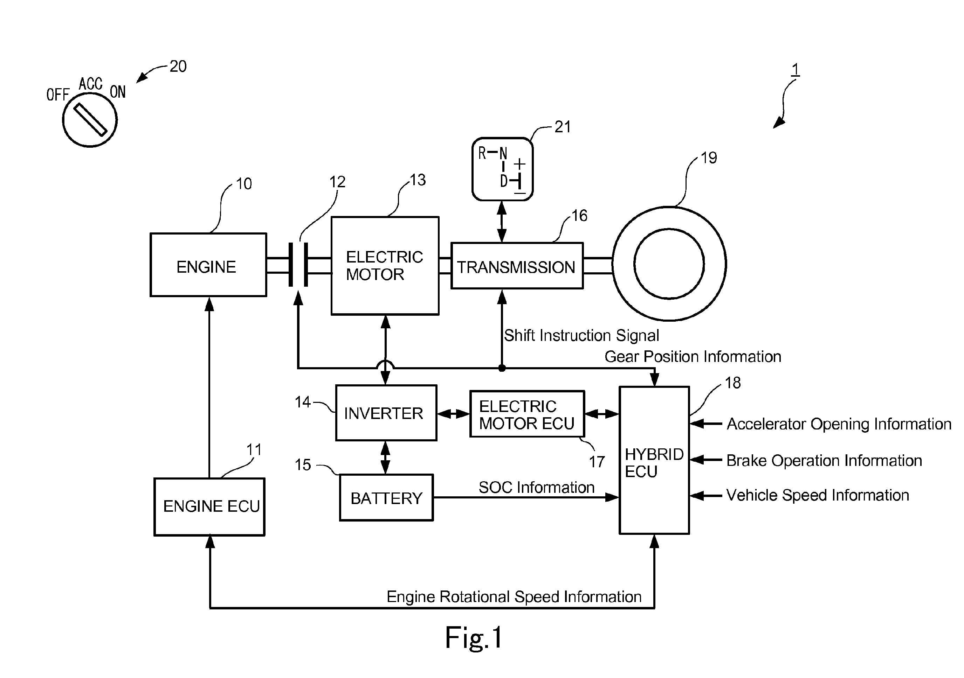

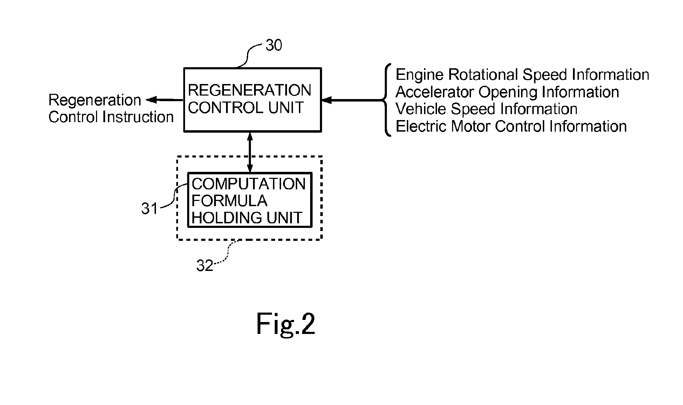

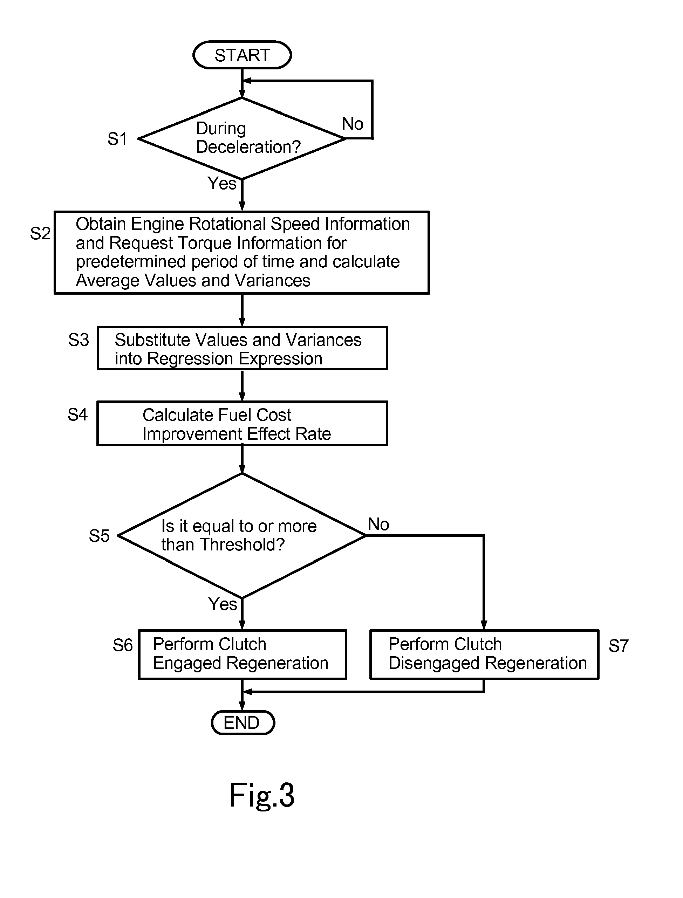

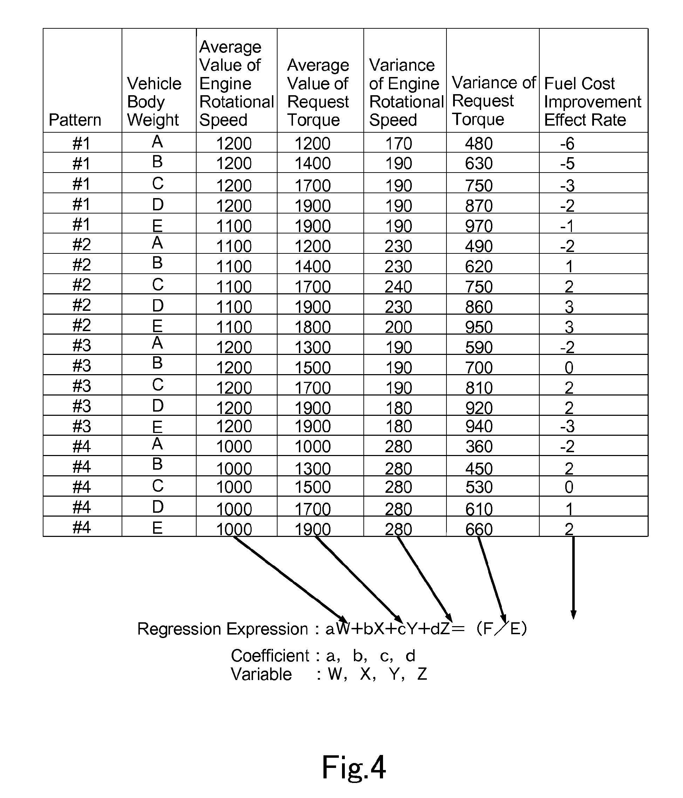

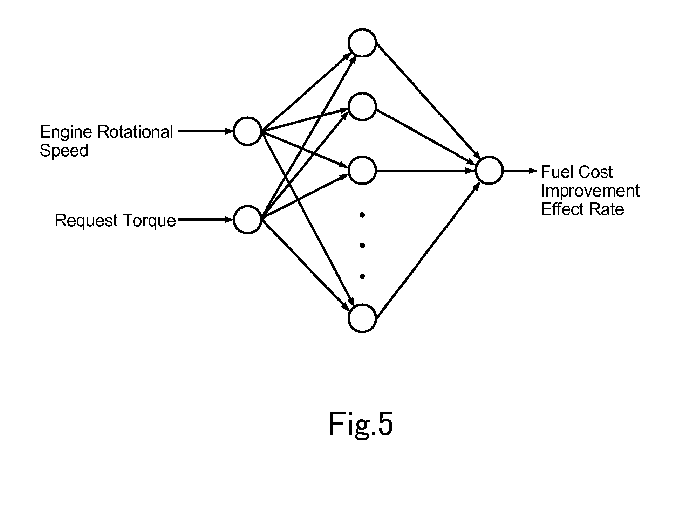

{Fig. 1}
{Fig. 1} Fig. 1 is a block diagram for illustrating an exemplary structure of a hybrid vehicle according to an embodiment of the present invention.
{Fig. 2} Fig. 2 is a block diagram for illustrating an exemplary configuration of a function implemented in a hybrid ECU illustrated in Fig. 1.
{Fig. 3} Fig. 3 is a flowchart for illustrating a process of a regeneration control unit illustrated in Fig. 2.
{Fig. 4} Fig. 4 is a view for describing a regression expression held in a computation formula holding unit illustrated in Fig. 2.
{Fig. 5} Fig. 5 is a conceptual diagram of a neural network of another embodiment.

### {Description of Embodiments}

Hereinafter, the hybrid vehicle according to an embodiment of the present invention will be described with reference to Figs. 1 to 5.

Fig. 1 is a block diagram for illustrating an exemplary structure of a hybrid vehicle 1. The hybrid vehicle 1 is an example of a vehicle. The hybrid vehicle 1 is driven by an engine (internal combustion engine) 10 and/or an electric motor 13 through a gear box that is an automated mechanical/manual transmission. The regeneration torque of the electric motor 13 can generate braking force like the engine braking of the engine 10 during deceleration. Note that the automated mechanical/manual transmission is a transmission that can automatically shift the gears while having the same structure as a manual transmission.

The hybrid vehicle 1 includes the engine 10, an engine Electronic Control Unit (ECU) 11, a clutch 12, the electric motor 13, an inverter 14, a battery 15, a transmission 16, an electric motor ECU 17, a hybrid ECU 18 (in claims, the hybrid ECU 18 is referred to as a regeneration control device and an internal memory 32 is referred to as computation formula holding means), a wheel 19, a key switch 20 and a shift unit 21. Note that the transmission 16 includes the above-mentioned automated mechanical/manual transmission, and is operated by the shift unit 21 including a drive range (hereinafter, referred to as a D (Drive) range). When the shift unit 21 is at the D range, the gear shifting operation of the automated mechanical/manual transmission is automated.

The engine 10 is an example of an internal combustion engine, and is controlled by the engine ECU 11. The engine 10 internally combusts gasoline, light oil, Compressed Natural Gas (CNG), Liquefied Petroleum Gas (LPG), alternative fuel, or the like in order to generate power for rotating a rotating shaft and transmit the generated power to the clutch 12.

The engine ECU 11 is a computer working in coordination with the electric motor ECU 17 according to the instructions from the hybrid ECU 18, and controls the engine 10, for example, the amount of fuel injection and the valve timing. For example, the engine ECU 11 includes a Central Processing Unit (CPU), an Application Specific Integrated Circuit (ASIC), a microprocessor (microcomputer), a Digital Signal Processor (DSP), and the like, and internally has an operation unit, the memory, an Input/Output (I/O) port, and the like.

The clutch 12 is controlled by the hybrid ECU 18, and transmits the shaft output from the engine 10 to the wheel 19 through the electric motor 13 and the transmission 16. In other words, the clutch 12 mechanically connects the rotating shaft of the engine 10 to the rotating shaft of the electric motor 13 by the control of the hybrid ECU 18 in order to transmit the shaft output of the engine 10 to the electric motor 13. On the other hand, the clutch 12 cuts the mechanical connection between the rotating shaft of the engine 10 and the rotating shaft of the electric motor 13 so that the rotating shaft of the engine 10 and the rotating shaft of the electric motor 13 can rotate at different rotational speeds from each other.

For example, the clutch 12 mechanically connects the rotating shaft of the engine 10 to the rotating shaft of the electric motor 13, for example, when the hybrid vehicle 1 runs by the power of the engine 10 and this causes the electric motor 13 to generate electric power, when the driving force of the electric motor 13 assists the engine 10, and when the electric motor 13 starts the engine 10.

Further, for example, the clutch 12 cuts the mechanical connection between the rotating shaft of the engine 10 and the rotating shaft of the electric motor 13 when the engine 10 stops or is in an idling state and the hybrid vehicle 1 runs by the driving force of the electric motor 13, and when the hybrid vehicle 1 reduces the speed or runs on the downgrade and the electric motor 13 regenerates electric power while the engine 10 stops or is in an idling state.

Note that the clutch 12 differs from the clutch operated by the driver's operation of a clutch pedal, and is operated by the control of the hybrid ECU 18.

The electric motor 13 is a so-called motor generator that supplies a shaft output to the transmission 16 by generating the power for rotating the rotating shaft using the electric power supplied from the inverter 14, or that supplies electric power to the inverter 14 by generating the electric power using the power for rotating the rotating shaft supplied from the transmission 16. For example, when the hybrid vehicle 1 gains the speed or runs at a constant speed, the electric motor 13 generates the power for rotating the rotating shaft to supply the shaft output to the transmission 16 in order to cause the hybrid vehicle 1 to run in cooperation with the engine 10. Further, the electric motor 13 works as an electric generator, for example, when the electric motor 13 is driven by the engine 10, or the hybrid vehicle 1 reduces the speed or runs on the downgrade. In that case, electric power is generated by the power for rotating the rotating shaft supplied from the transmission 16 and is supplied to the inverter 14 in order to charge the battery 15. At that time, the electric motor 13 generates the amount of regeneration torque according to the regenerated electric power.

The inverter 14 is controlled by the electric motor ECU 17, and converts the direct voltage from the battery 15 into an alternating voltage or converts the alternating voltage from the electric motor 13 into a direct voltage. When the electric motor 13 generates power, the inverter 14 converts the direct voltage from the battery 15 into an alternating voltage and supplies the electric power to the electric motor 13. When the electric motor 13 generates electric power, the inverter 14 converts the alternating voltage from the electric motor 13 into a direct voltage. In other words, in that case, the inverter 14 works as a rectifier and a voltage regulator for supplying a direct voltage to the battery 15.

The battery 15 is a secondary cell capable of being charged and discharged. The battery 15 supplies electric power to the electric motor 13 through the inverter 14 when the electric motor 13 generates power. Alternatively, the battery 15 is charged with the electric power generated by the electric motor 13 when the electric motor 13 generates electric power. A proper range of the State of Charge (hereinafter, referred to as SOC) is determined for the battery 15 and the battery 15 is controlled to maintain the SOC within the range.

The transmission 16 includes an automated mechanical/manual transmission (not shown in the drawings) that selects one of a plurality of gear ratios (change gear ratios) according to the shift instruction signal from the hybrid ECU 18 in order to shift the change gear ratios and transmit the gear-shifted power of the engine 10 and/or of the electric motor 13 to the wheel 19. Alternatively, the transmission 16 transmits the power from the wheel 19 to the electric motor 13, for example, when the vehicle reduces the speed or runs on the downgrade. Note that the automated mechanical/manual transmission can also shift the gear position to a given gear number by the driver's hand operation of the shift unit 21.

The electric motor ECU 17 is a computer working in coordination with the engine ECU 11 according to the instructions from the hybrid ECU 18, and controls the electric motor 13 by controlling the inverter 14. For example, the electric motor ECU 17 includes a CPU, an ASIC, a microprocessor (microcomputer), a DSP, and the like, and internally has an operation unit, a memory, an I/O port, and the like.

The hybrid ECU 18 is an example of a computer. For hybrid driving, based on accelerator opening information, brake operation information, vehicle speed information, the gear position information obtained from the transmission 16, the engine rotational speed information obtained from the engine ECU 11, and the SOC information obtained from the battery 15, the hybrid ECU 18 controls the clutch 12 and supply the shift instruction signal in order to control the transmission 16. The hybrid ECU 18 gives instruction to the electric motor ECU 17 to control the electric motor 13 and the inverter 14 and gives instruction to the engine ECU 11 to control the engine 10. The instructions include a regeneration control instruction described below. For example, the hybrid ECU 18 includes a CPU, an ASIC, a microprocessor (microcomputer), a DSP, and the like, and internally has an operation unit, a memory, an I/O port, and the like.

Note that a computer program to be executed by the hybrid ECU 18 can be installed on the hybrid ECU 18 that is a computer in advance by being stored in a non-volatile memory inside the hybrid ECU 18 in advance.

The engine ECU 11, the electric motor ECU 17, and the hybrid ECU 18 are connected to each other, for example, through a bus complying with the standard of the Control Area Network (CAN) or the like.

The wheel 19 is a drive wheel for transmitting the driving force to the road surface. Note that, although only a wheel 19 is illustrated in Fig. 1, the hybrid vehicle 1 actually includes a plurality of the wheels 19.

The key switch 20 is a switch that is turned ON/OFF, for example, by insertion of a key by the user at the start of drive. Turning ON the switch activates each unit of the hybrid vehicle 1, and turning OFF the key switch 20 stops each unit of the hybrid vehicle 1.

As described above, the shift unit 21 is for giving the instruction from the driver to the automated mechanical/manual transmission of the transmission 16. When the shift unit 21 is at the D range, the gear shifting operation of the automated mechanical/manual transmission is automated.

Fig. 2 is a block diagram for illustrating an exemplary configuration of a function implemented in the hybrid ECU 18 executing a computer program. In other words, when the hybrid ECU 18 executes a computer program, the function of a regeneration control unit 30 (in claims, referred to as control means) is implemented. Note that a computation formula holding unit 31 (in claims, referred to as means for holding a computation formula) is a storage area for holding a computation formula to be referred by the regeneration control unit 30. The computation formula holding unit 31 can be implemented by allotting the storage area in a part of the memory 32 included in the hybrid ECU 18. Here, the computation formula is a regression expression for calculating the fuel cost improvement effect rate from the average value and the variance of the engine rotational speed calculated from the engine rotational speeds, and the average value and the variance of the request torque calculated from the request torque. The detail will be described below.

Here, the fuel cost improvement effect rate is obtained by comparing two types of fuel consumption. One is at the time when the rotating shaft of the engine 10 and the rotating shaft of the electric motor 13 have been connected to each other during the deceleration of the hybrid vehicle 1 (in other word, in the engaged state of the clutch 12) and the vehicle, in advance, has run for a predetermined period of time in each of a plurality of patterns of running with varying an amount of loaded cargo in multiple steps. The other is at the time when the rotating shaft of the engine 10 and the rotating shaft of the electric motor 13 are disconnected to each other during the deceleration of the hybrid vehicle 1 (in other word, in the disengaged state of the clutch 12) and the vehicle, in advance, has run for a predetermined period of time in each of a plurality of patterns of running with varying an amount of loaded cargo in multiple steps. The fuel cost improvement effect rate, for example, becomes a negative value when the fuel consumption in the engaged state of the clutch 12 has been improved more than the fuel consumption in the disengaged state of the clutch 12 at each of the patterns of running. On the other hand, the fuel cost improvement effect rate, for example, becomes a positive value when the fuel consumption in the disengaged state of the clutch 12 has been improved more than the fuel consumption in the engaged state of the clutch 12.

Such a comparison of fuel consumption is conducted by the manufacturer of the hybrid vehicle 1 with the test runs in which the vehicle runs on a predetermined route in each of the patterns of running. The regression expression described below is established based on the results from the test runs that have been conducted by the manufacturer of the hybrid vehicle 1 as described above. Using the regression expression makes it possible to calculate a fuel cost improvement effect rate only from the engine rotational speed and the request torque without knowing the amount of loaded cargo and the pattern of running of the hybrid vehicle 1. Note that the fuel cost improvement effect rate is described as (F/E) in Fig. 4.

The regeneration control unit 30 is a function for giving the instruction about a regeneration control to the engine ECU 11, the clutch 12, and the electric motor ECU 17 based on the engine rotational speed information, the accelerator opening information, the vehicle speed information, electric motor control information, and the computation formula held in the computation formula holding unit 31.

Next, the process for the regeneration control performed in the hybrid ECU 18 executing the computer program will be described with reference to the flowchart illustrated in Fig. 3. Note that the procedures from step S1 to step S7 in Fig. 3 is a cycle of the process, and is repeatedly performed as long as the key switch 20 is in the ON state.

In the "START" illustrated in Fig. 3, the key switch 20 is in the ON state, the hybrid ECU 18 has executed a computer program, and a function of the regeneration control unit 30 is implemented by the hybrid ECU 18. Then, the process goes to step S1.

In step S1, the regeneration control unit 30 determines from the accelerator opening information and the vehicle speed information whether the hybrid vehicle 1 decelerates. In other words, when the accelerator opening information indicates that the accelerator opening has zero degree, the electric motor control information indicates that the electric motor 13 regenerates electric power, and the vehicle speed information indicates that the vehicle speed decreases, the hybrid vehicle 1 is decelerating. When it is determined in step S1 that the hybrid vehicle 1 is decelerating, the process goes to step S2. On the other hand, when it is determined in step S1 that the hybrid vehicle 1 is not decelerating, step S1 of the process is repeated.

In step S2, the regeneration control unit 30 obtains the engine rotational speed information and the request torque information for a predetermined period of time and calculates the average values and the variances. Then the process goes to step S3. Note that the regeneration control unit 30 obtains the request torque information from the driver according to the accelerator opening information.

In step S3, the regeneration control unit 30 substitutes the average value of the engine rotational speed, the average value of the request torque, the variance of the engine rotational speed, and the variance of the request torque that have been calculated in step S2 into the regression expression that is the computation formula held in the computation formula holding unit 31 (described in Fig. 4). Then the process goes to step S4.

In step S4, the regeneration control unit 30 calculates the fuel cost improvement effect rate from the regression expression. Then the process goes to step S5.

In step S5, the regeneration control unit 30 determines whether the fuel cost improvement effect rate is equal to or more than a threshold. When it is determined in step S5 that the fuel cost improvement effect rate is equal to or more than the threshold, the process goes to step S6. On the other hand, when it is determined in step S5 that the fuel cost improvement effect rate is less than the threshold, the process goes to step S7. Note that the threshold will be described below.

In step S6, the regeneration control unit 30 engages the clutch 12 in order to cause the electric motor 13 to regenerate electric power, and terminates a cycle of the process (END).

In step S7, the regeneration control unit 30 disengages the clutch 12 in order to cause the electric motor 13 to regenerate electric power, and terminates a cycle of the process (END).

Next, the regression expression that is the above-mentioned computation formula and the threshold of the fuel cost improvement effect rate will be described with reference to Fig. 4. The table illustrated in Fig. 4 lists various data for establishing the regression expression (aW + bX + cY + dZ = (F/E); coefficient : a, b, c, and d; variable : W, X, Y, and Z; (F/E) : the fuel cost improvement effect rate). The patterns #1, #2, #3, and #4 illustrated in Fig. 4 are the patterns of running of the hybrid vehicle 1. For example, the pattern #1 is the run on a public road, the pattern #2 is the run on an expressway, the pattern #3 is the run on a congested road, and the pattern #4 is the run on an urban street. The vehicle body weights show the gross weight of the hybrid vehicle 1 and are set as A < B < C < D < E (the unit is a ton or the like). Note that the data illustrated in Fig. 4 is the data of a type of vehicle so that the variations of the gross weights are caused, for example, by the variations of the weights of the loaded cargos.

In other words, the various data illustrated in Fig. 4 are the compilations of the average value of the engine rotational speed, the average value of the request torque, the variance of the engine rotational speed, the variance of the request torque, and the fuel cost improvement effect rate at the time when the hybrid vehicle 1 experimentally runs for a predetermined period of time in each of the patterns #1, #2, #3, and #4 with each of the vehicle body weights A, B, C, D, and E. To calculate a predetermined fuel cost improvement effect rate when a predetermined value is substituted into each of the variables W, X, Y, and Z, each of the coefficients a, b, c, and d of the regression expression is determined using the various data. Note that a regression expression and the way to establish a regression expression are well-known facts so that the detailed descriptions are omitted.

The hybrid vehicle 1 holds the regression expression established as described above in the computation formula holding unit 31 of the regeneration control unit 30, obtains the engine rotational speed information and the request torque information (according to the accelerator opening information), calculates the average value of the engine rotational speed, the average value of the request torque, the variance of the engine rotational speed, and the variance of the request torque, and substitutes the values and the variances into the variables W, X, Y, and Z, respectively, so that the hybrid vehicle 1 can calculate a fuel cost improvement effect rate (F/E).

Note that, in the columns of the fuel cost improvement effect rates in Fig. 4, the larger the value of the described fuel cost improvement effect rate is, the better the fuel efficiency is. Then, for example, while the threshold is set at "zero", the vehicle is controlled to perform a clutch-engaged regeneration when the threshold is equal to or more than "zero" or is a positive number exceeding "zero", and to perform a clutch-disengaged regeneration when the threshold is less than "zero" or, namely, is a negative number less than "zero". Further, the threshold can variously be set depending on the user's principle for using the vehicle. For example, the threshold is set at "two" and the clutch-engaged regeneration is performed only when the fuel cost improvement effect rate is quite good.

### Advantageous Effect

As described above, when the improvement of the fuel efficiency is expected to some extent, the clutch 12 is engaged and the electric motor 13 can regenerate electric power during deceleration. At that case, while the efficiency in the regeneration of the electric motor 13 decreases, the fuel consumption of the engine 10 decreases. This can reduce the total of the energy consumption of the hybrid vehicle 1. Furthermore, only the engine rotational speed information and the request torque information is required to be substituted into the regression expression. Thus, it is not necessary, for example, to separately attach sensors. This can simplify the structure of the device and save the cost.

### Other Embodiments

Fig. 5 is a conceptual diagram of a neural network in which the engine rotational speed and the request torque are input and the fuel cost improvement effect rate is output. Such a neural network can be established and be held in the computation formula holding unit 31 of the regeneration control unit 30. Note that the method for establishing the neural network is the same as that for establishing the above-mentioned regression expression. The neural network is established for calculating a fuel cost improvement effect rate from an engine rotational speed and request torque at the time when the hybrid vehicle 1 experimentally runs for a predetermined period of time in each of the patterns #1, #2, #3, and #4 with each of the vehicle body weights A, B, C, D, and E. The way to establish a neural network is well-known fact so that the detailed description is omitted. In that case, it is not necessary in the procedure of step S2 in the flowchart of Fig. 3 to calculate the average values and the variances after obtaining the engine rotational speed information and the request torque information for a predetermined period of time. Thus, "input information into neural network" is performed, instead of the "substitute values into regression expression" in step S3, just after obtaining the engine rotational speed information and the request torque information for a predetermined period of time as the procedure of step S2. This can simplify the process.

Further, for example, a membership function that is used for a fuzzy inference can also be used instead of the regression expression. Note that the method for establishing the membership function is the same as that for establishing the above-mentioned regression expression. The membership function is established for calculating a fuel cost improvement effect rate from an engine rotational speed and request torque at the time when the hybrid vehicle 1 experimentally runs for a predetermined period of time in each of the patterns #1, #2, #3, and #4 with each of the vehicle body weights A, B, C, D, and E. The way to establish a membership function is well-known fact so that the detailed description is omitted. In that case, it is not necessary in the procedure of step S2 in the flowchart of Fig. 3 to calculate the average values and the variances after obtaining the engine rotational speed information and the request torque information for a predetermined period of time. Thus, "input information into membership function" is performed, instead of the "substitute values into regression expression" in step S3, just after obtaining the engine rotational speed information and the request torque information for a predetermined period of time as the procedure of step S2. This can simplify the process.

The values of the boundaries for determination can variously be changed, for example, the "equal to or more than" can be changed into "exceeds" and the "less than" can be changed into "equal to or less than" in the description of the flowchart illustrated in Fig. 3.

Although the engine 10 has been described as an internal combustion engine, the engine 10 can also be a heat engine including an external combustion engine.

Further, while the computer program executed by the hybrid ECU 18 is installed on the hybrid ECU 18 in advance in the above-mentioned description, the computer program can be installed on the hybrid ECU 18 as a computer by attaching removable media recording the computer program (storing the computer program), for example, to a drive (not shown in the drawings) and storing the computer program read from the removable media in a non-volatile memory inside the hybrid ECU 18, or receiving, with a communication unit (not shown in the drawings), a computer program transmitted through a wired or wireless transmission medium and storing the computer program in a non-volatile memory inside the hybrid ECU 18.

Further, each ECU can be implemented by an ECU combining each of the ECUs. Alternatively, an ECU can newly be provided by the further subdivision of the function of each ECU.

Note that the computer program executed by the computer can be for performing the process in chronological order according to the order described herein or can be for performing the process in parallel or at the necessary timing, for example, when the computer program is invoked.

Further, the embodiments of the present invention are not limited to the above-mentioned embodiments, and can be variously modified without departing from the gist of the invention.

### {Reference Signs List}

1: Hybrid vehicle
10: Engine
11: Engine ECU
12: Clutch
13: Electric motor
14: Inverter
15: Battery
16: Transmission
17: Electric motor ECU
18: Hybrid ECU (regeneration control device)
19: Wheel
30: Regeneration control unit (Control means)
31: Computation formula holding unit (Means for holding a computation formula)

## Claims

1. A regeneration control device of a hybrid vehicle that includes an engine and an electric motor, that is capable of running by the engine or the electric motor or capable of running by a cooperation between the engine and the electric motor, and that is capable of performing regenerative power generation with the electric motor at least during deceleration, the regeneration control device comprising:
means for holding a computation formula for calculating a fuel cost improvement effect rate from an engine rotational speed and a request torque at a time when the hybrid vehicle has run, in advance, for a predetermined period of time in each of a plurality of patterns of running with varying an amount of loaded cargo in multiple steps while a rotating shaft of the engine and a rotating shaft of the electric motor have been connected to each other during deceleration of the hybrid vehicle; and
control means for calculating the fuel cost improvement effect rate based on the engine rotational speed and the request torque at the time when the hybrid vehicle has run for a predetermined period of time while decelerating, and based on the computation formula and, when the calculated fuel cost improvement effect rate satisfies a predetermined condition, the control means for controlling the hybrid vehicle to perform a regenerative power generation while a rotating shaft of the engine and the rotating shaft of the electric motor are connected to each other.

2. The regeneration control device according to claim 1,
wherein the computation formula is a regression expression for an average value of the engine rotational speed, an average value of the request torque, a variance of the engine rotational speed, and a variance of the request torque of the fuel improvement effect rate that has been established based on an average value of the engine rotational speed, an average value of the request torque, a variance of the engine rotational speed, and a variance of the request torque at a time when the hybrid vehicle has run, in advance, for a predetermined period of time in each of a plurality of patterns of running with varying an amount of loaded cargo in multiple steps while the rotating shaft of the engine and the rotating shaft of the electric motor have been connected to each other during deceleration of the hybrid vehicle, and the fuel cost improvement effect rate at that time, and
the control means calculates the average value of the engine rotational speed, the average value of the request torque, the variance of the engine rotational speed, and the variance of the request torque from the engine rotational speed and the request torque at the time when the hybrid vehicle has run for a predetermined period of time while decelerating and substitutes a result from the calculation into the regression expression in order to calculate the fuel cost improvement effect rate.

3. The regeneration control device according to claim 1,
wherein the means for holding the computation formula holds a neural network, instead of the computation formula, the neural network being established based on the engine rotational speed and the request torque at a time when the hybrid vehicle has run, in advance, for a predetermined period of time in each of a plurality of patterns of running with varying an amount of loaded cargo in multiple steps while the rotating shaft of the engine and the rotating shaft of the electric motor have been connected to each other during deceleration of the hybrid vehicle, and based on the fuel cost improvement effect rate, and
the control means inputs, to the neural network, the engine rotational speed and the request torque at the time when the hybrid vehicle has run for a predetermined period of time while decelerating in order to calculate the fuel cost improvement effect rate.

4. The regeneration control device according to claim 1,
wherein the computation formula is a membership function that has been established based on the engine rotational speed and the request torque at a time when the hybrid vehicle has run, in advance, for a predetermined period of time in each of a plurality of patterns of running with varying an amount of loaded cargo in multiple steps while the rotating shaft of the engine and the rotating shaft of the electric motor have been connected to each other during deceleration of the hybrid vehicle, and based on the fuel cost improvement effect rate, and
the control means substitutes the engine rotational speed and the request torque at the time when the hybrid vehicle has run for a predetermined period of time while decelerating into the membership function in order to calculate the fuel cost improvement effect rate.

5. A hybrid vehicle comprising the regeneration control device according to any of claims 1 to 4.

6. A regeneration control method of a hybrid vehicle that includes an engine and an electric motor, that is capable of running by the engine or the electric motor or capable of running by a cooperation between the engine and the electric motor, and that is capable of performing regenerative power generation with the electric motor at least during deceleration, the regeneration control method comprising:
a computation formula for describing a relationship between an engine rotational speed and request torque, and a fuel cost improvement effect rate, the engine rotational speed and the request torque at a time when the hybrid vehicle has run, in advance, for a predetermined period of time in each of a plurality of patterns of running with varying an amount of loaded cargo in multiple steps while a rotating shaft of the engine and a rotating shaft of the electric motor have been connected to each other during deceleration of the hybrid vehicle; and
control means for calculating the fuel cost improvement effect rate based on the engine rotational speed and the request torque at the time when the hybrid vehicle has run for a predetermined period of time while decelerating, and based on the computation formula, and for controlling the hybrid vehicle to perform a regenerative power generation while the rotating shaft of the engine and the rotating shaft of the electric motor are connected to each other when the calculated fuel cost improvement effect rate satisfies a predetermined condition.

7. A computer program for causing an information processing apparatus to implement a function of the regeneration control device according to any of claims 1 to 4.
